# EUROPÄISCHE PATENTSCHRIFT

(11) **EP 0 680 536 B1**
(45) Veröffentlichungstag und Bekanntmachung des Hinweises auf die Patenterteilung: **04.12.1996**
(21) Anmeldenummer: 94904566.0
(22) Anmeldetag: 08.01.1994
(51) Int. Cl.: E02B 15/04

(54) **ÖLBARRIERE**
OIL BARRIER
BARRIERE PERMETTANT D'ELIMINER LE PETROLE DE LA SURFACE DE L'EAU

(30) Priorität: 23.01.1993 DE 4301791; 31.07.1993 DE 4325806
(43) Veröffentlichungstag der Anmeldung: 08.11.1995
(73) Patentinhaber: Schiwek, Helmut, D-47057 Duisburg (DE)
(72) Erfinder: Schiwek, Helmut, D-47057 Duisburg (DE)
(74) Vertreter: Schulte, Jörg, Dipl.-Ing.
(86) Internationale Anmeldenummer: DE9400008
(87) Internationale Veröffentlichungsnummer: WO9417249

(56) Entgegenhaltungen:
- WO-A-83/00710
- DE-A- 1 634 197
- DE-C- 4 140 247
- FR-A- 2 111 239
- FR-A- 2 466 571
- FR-A- 2 646 189
- GB-A- 1 235 463
- US-A- 5 165 821

## Beschreibung

Die Erfindung betrifft eine Ölbarriere gemäß dem Oberbegriff des Anspruches 1.

Mit immer größer werdenden Öltransportern wird auch die Gefährdung der Umwelt durch auslaufendes Öl immer größer. Im Rahmen von Ölkatastrophen der letzten Jahre sind ganze Küstenstriche stark verunreinigt und das Leben im Meer unter den gefährdeten Bereichen völlig vernichtet worden. Man hat daher - so auch im Golfkrieg - vor der Küste insbesondere von Saudi-Arabien versucht, das einmal ausgetretene Öl an der Ausbreitung zu hindern und durch geeignete Mittel wieder aufzunehmen. So hat man gemäß der FR-A-2 646 189 versucht, hydrophobierte Mineralfasern auf die Wasseroberfläche zu blasen. An diese Fasern sollte sich das Öl anlagern, so daß sie dann als Masse leichter aufgenommen und entsorgt werden können. Die Fasern sind mit Silikonöl hydrophobiert, wobei aufgrund der kurzen Fasern ein Absinken dieser Fasern nicht vermieden werden kann, so daß es nach wie vor zu Verseuchung und zur Verschmutzung des Meeresgrundes kommt. Aus der GB-A-1 235 463 ist ein Verfahren bekannt, bei dem das auf dem Wasser aufliegende Öl über anorganische Fasern aufgenommen werden soll, wobei die Fasern vorher mit einem wasserabstoßenden Material versehen sind. Die Fasern schwimmen demnach auf dem Öl und führen zum Anlagern des Öles, das dann durch Abbrennen von den Fasern wieder entfernt wird. Abgesehen davon, daß das einfache Abbrennen des von den Fasern aufgenommenen Öls volkswirtschaftlich nicht vertretbar ist, tritt allein schon durch das Verbrennen des Öls eine erhebliche Umweltbelastung auf. Darüber hinaus ist das Speichervermögen der einfach auf die Wasseroberfläche aufgesprühten und aufgelegten anorganischen Fasern minimal, so daß nur geringe Mengen an Öl kurzfristig und sicher vom Wasser aufgenommen werden können. Besonders nachteilig ist, daß bei all diesen bekannten Lösungen jeweils die Fasern locker auf die Wasseroberfläche aufgegeben werden, so daß es in der Regel überhaupt nicht möglich ist, die einmal ausgetretene oder aufgetretene Öllache an einer weiteren Ausbreitung zu hindern. Hierfür wird in dem deutschen Patent DE-C-41 40 247 der Vorschlag gemacht, aus derart hydrophobierten Glaswollematerialien eine Barriere zu bilden, indem diese Glasfasern in einen perforierten Schlauch eingegeben werden. Durch die Perforation kann das Öl in den Schlauch und in die Glaswolle eintreten, wo das Öl dann entsprechend gebunden und so lange vorgehalten wird, bis die Barriere vom Wasser abgenommen und entsorgt ist. Nachteilig dabei ist, daß dieser Öladsorber bzw. die entsprechende Barriere oben auf der Wasseroberfläche aufschwimmt, so daß nicht vermieden werden kann, daß bei Wellengang Öl unter der Barriere hindurch in den Bereich jenseits der Barriere austritt. Aus der FR-A-2 111 239 ist eine zwei Bereiche aufweisende Ölbarriere bekannt, bei der die auf dem Wasser aufschwimmende Schaumstoffmasse wasserundurchdringlich oder hydrophob ist. Der obere Bereich kann somit weder Wasser noch Öl oder ölähnliche Stoffe aufnehmen. Er wirkt, in der Schwimmlage durch den unteren wasserdurchlässigen Schaumstoffbereich stabilisiert, ausschließlich als Barriere, die z. B. das Öl darin hindert, sich flächenmäßig weiter auszudehnen. Der untere, ins Wasser eingetauchte Bereich kann - wenn überhaupt - aufgrund des Schaums nur begrenzt Wasser aufnehmen. Er ist trotz eines wesentlich größeren Volumens gegenüber dem oberen Bereich als auch bei hohen Wellen stabilisierender Kiel ungeeignet.

Der Erfindung liegt daher die Aufgabe zugrunde, einen leicht auf das Wasser auflegbaren und von dort wieder aufnehmbaren Öladsorber zu schaffen, der auch bei hohen Wellen sicher und vom Öl nicht überwindbar im Wassser liegt und der darüber hinaus gut herzustellen und einfach zu handhaben ist.

Die Aufgabe wird erfindungsgemäß durch die Merkmale des Anspruches 1 gelöst.

Diese Ausbildung hat den überraschenden Effekt, daß sich die Ölbarriere immer in der gleichen Form auf der Wasseroberfläche aufstellt, weil die Fasermatten im unteren Bereich sich sehr schnell mit Wasser "vollsaugen", so daß hier der Kiel schnell und sicher vorgegeben ist, der somit eine genaue Lage der Barriere sicherstellt. Aufgrund der genauen und gesicherten Kiellage kann der Ölteppich unter der Barriere auch bei hohem Wellengang nicht hindurchgehen und darüber hinaus ist auch durch die immer gleiche und sichere Lage der Ölbarriere erreicht, daß das Öl nicht darüber hinwegschwappt. Die im oberen Bereich bzw. in der entsprechenden Zelle angeordneten hydrophobierten Fasermatten sorgen dafür, daß das anstehende Öl sicher und in kurzer Zeitspanne gespeichert wird und daß die Ölbarriere dadurch noch besser aufschwimmt. Durch die Speicherung wird nämlich der Zusatzeffekt erzielt, daß der Auftrieb der Barriere erhöht wird. Die beiden Bereiche sind als Zellen ausgebildet und vom Volumen her unterschiedlich bemessen. Durch diese Ausbildung ist gewährleistet, daß der Öladsorber immer oben auf dem Wasser aufschwimmt, wobei die im Wasser liegende Zelle mit den nichthydrophobierten Fasermatten vorteilhaft stabilisierend und ein Durchdringen des Öls verhindernd wirkt. Dazu ist die untere Zelle zweckmäßigerweise als nasenförmiger Ansatz ausgebildet, so daß beide Teile getrennt gefertigt werden und dann zusammengefügt werden können. Auch andere Ausbildungen wie die Verbindung beider Zellen über einen Steg sind denkbar. Die Fasermatten erbringen eine hohe Zugfestigkeit, so daß die Barriere vorteilhaft gespannt, vor allem aber nach dem Einsatz eingeholt werden kann, ohne daß das Öl durch Zusammenpressen der Barriere vorzeitig herausgedrückt wird.

Eine weitere zweckmäßige Ausbildung sieht vor, daß die Glasfasern der Fasermatten mit einem aus Epoxy- und/oder Methylon- oder Polyesterharz, Härter, Methylpolysiloxan oder Silikonmethylharz und Staubbindemittel bestehenden Bindemittel (hydrophob) bzw. die Fasermatte mit einem aus Epoxy- und/oder Methylon- oder Polyesterharz, Härter und Staubbindemittel bestehenden Bindemittel (hydrophil) beschichtet sind, das vorher zu einer Emulsion gemischt oder als Einzel- oder Mehrkomponentenstoff auf die Fasern aufgesprüht wird und zwar entsprechend getrennt auf die Fasermatten der oberen bzw. der unteren Zelle. Durch die entsprechende Vorbereitung des Bindemittels und durch seine Ausbildung wird erreicht, daß die einzelnen zu Matten bzw. Formkörpern zusammengefügten Fasern eine hohe Stabilität und ausreichende Flexibilität aufweisen. Sie können so mehrfach eingesetzt werden, insbesondere auch, weil durch die Verwendung des Epoxyharzes eine praktisch unbegrenzte Lebensdauer gewährleistet ist. Die einzelne Barriere kann bei Bedarf auf dem Schiff entsorgt oder auch zum Land gebracht und dort entsorgt werden, um dann erneut eingesetzt zu werden. Es ist dabei unschädlich, wenn geringe Mengen von Öl in der Barriere verbleiben, weil dieses Öl eher den Auftrieb fördert, als nachteilige Auswirkungen aufweisen kann. Die beschriebene Beschichtung und das entsprechende Bindemittel haben darüber hinaus den Vorteil, daß sie gegen sehr viele Stoffe resistent sind und ausgesprochen gute Hafteigenschaften bezüglich Glas aufweisen. Damit kann das Bindemittel geschickt aufgebracht und verarbeitet werden, eine Glasfasergittermatte bilden, die eine hohe Standfestigkeit aufweist und die insbesondere für die hier vorgesehene die Gittermatte starkbeaufschlagenden Maßnahmen geeignet ist.

Für die üblicherweise zum Einsatz kommenden Materialien ist es vorteilhaft, wenn die Glasfasern mit 6 bis 9 Gew.-% Epoxy- und/ oder Methylonharz, 0,5 bis 4 Gew.-% Silikonharz und wie bekannt Staubbindemittel geringer Menge beschichtet sind. Die entsprechenden Mengen insbesondere an Epoxy-Harz können sich der Obergrenze dann insbesondere nähern bzw. diese erreichen, wenn eine entsprechende Steifigkeit nicht durch Epoxy-Harz und die Raumdichte erreicht werden sollen, sondern nur durch die Art des Epoxy-Harzes als solches und damit bei geringen Raumdichten. Das Epoxy-Harz hat den Vorteil, daß es bei relativ geringen Temperaturen verarbeitet werden kann, so daß Verarbeitungstemperaturen von 20 bis 30 ° ausreichen. Je nach gewünschter Steifigkeit der Fasermatten kann insbesondere der Anteil des Epoxy-Harzes wie schon erwähnt nach oben verändert werden.

Zur Erhöhung der Zugfestigkeit aber auch um der Barriere eine bestimmte Form zu geben, ist es von Vorteil, wenn die ins Wasser eintauchende Zelle der Barriere von einer nasenförmigen Verschmälerung gebildet ist, wobei beide Zellen von einem dünnen Glasflies o. ä. Ummantelung umfaßt sind. Hierdurch wird eine günstige Formgebung ermöglicht und gleichzeitig gezielt eine gewisse Keilform für die ins Wasser eintauchende Zelle vorgegeben.

Weiter vorne ist auf die Möglichkeit der Herstellung eines Bindemittels aus verschiedenen Harzen erwähnt. Es ist aber auch denkbar, daß die Fasermatte für die großvolumige Zelle aus rund 3 µm starken Glasfasern gefertigt sind, wobei als Bindemittel eine langkettige Stärke mit Silikonbeimengungen dient und wobei die Fasermatten der im Wasser befindlichen Zelle eine Raumdichte von rund 80 kg/m³ aufweisen. Über die Silikonbeimengungen wird die Stärke hydrophobiert, während sie selbst als vorteilhaftes Bindemittel dient, das durch die Silikonbeimengungen und die anschließende Wärmebehandlung wasserunlösbar gemacht wird. Dadurch erhält man eine Faser, die bei entsprechender Beschichtung zu Fasermatten zusammengefügt werden kann, die praktisch eine beliebige Dichte aufweisen könne, wobei man diese Matten dann zweckmäßigerweise so zusammenrollt, daß sich daraus ein runder Faserstrang ergibt. An diese Faser lagert sich das Öl oder die ähnlichen Stoffe an, so daß ein entsprechend ausgebildeter Öladsorber große Mengen an solchen Stoffen aufnimmt und eben wie schon erwähnt keinesfalls passieren läßt. Denkbar sind auch Mischungen aus Silikonharzen und Latex oder ähnlichen Bestandteilen, um die Stärke auf diese Art und Weise zu ersetzen, wenn sich dies als vorteilhaft erweist. Auch Latex wird auf diese Art und Weise wasserunlöslich. Für die im Wasser befindliche Zelle nimmt man zweckmäßigerweise Material, bei dem die Fasern der Fasermatten für die ins Wasser eintauchende Zelle mit einem wasserunlöslichen Bindemittel beschichtet sind. Dieses Bindemittel kann dabei sorgar hydrophil sein, so daß es Wasser geradezu auch noch anlagert, wodurch der gewünschte Effekt des sichernden Schwertes für die Ölbarriere noch schneller und sicherer erreicht wird.

Zur Sicherung einer Handhabungsfreundlichkeit sieht die Erfindung vor, daß die Ölbarriere über Halterungen verfügt, die die Verlegearbeiten und Rückaufnahme erleichternd und die mit außenbordseitig der Schiffe angebrachten Halterungen korrespondierend geformt sind. Dabei können die außenbordseitig der Schiffe angebrachten Halterungen Wannenform aufweisen, so daß die Ölbarriere einfach hineingelegt wird oder aber sie werden regelrecht fixiert, wobei durch die besondere Ausbildung der Ölbarriere sichergestellt ist, daß das einmal von der Ölbarriere aufgenommene Öl wirksam festgehalten wird, bis die Barriere am Land oder auf dem Schiff entsorgt wird. Die Ölbarriere, die mit Öl gefüllt ist, kann das eigentliche Schiff vorteilhaft nicht verschmutzen, weil das Öl in der Barriere festgehalten wird.

Für den Einsatz auf See, wo durch Wind und Wellen besonders hohe Beanspruchungen auftreten, eignet sich ein Öladsorber besonders gut, bei dem mehr als zwei, vorzugsweise vier Zellen mit sich nach unten hin verringernden Durchmesser eine Barriere bildend und beweglich zueinander verbunden sind, wobei die Zellen die Speicherzelle und eine keilförmige Zelle als Schleppschwert die Führungszelle bildend zusammengefügt sind. Diese Ausbildung ergibt ein den Wellenbewegungen sich optimal anpassendes Gesamtgebilde, das auf diese Art und Weise ein "Überschwappen" des Öls verhindert. Die unteren, im Wasser hängenden Zellen sind mit hydrophilem Material gefüllt, so daß sie als Kiel wirken, wobei es aber auch denkbar ist, daß abwechselnde Füllungen vorgesehen sind, um unter der Wasseroberfläche treibendes Öl quasi doch noch sicher aufnehmen zu können. Vorteilhaft dabei ist, daß durch eine solche Ausbildung ein insgesamt stabiles, aber dennoch gut auf dem Wasser aufzulegendes Gesamtgebilde geschaffen ist, das mit üblichen Hilfsmitteln auch sicher gehandhabt werden kann.

Um die großen Belastungen auch bei Sturm aushalten zu können und dabei auch noch ein Manövrieren mit der Ölbarriere zu ermöglichen, sieht die Erfindung vor, daß zwischen den einzelnen Zellen ein als Glasfaserkabel ausgebildetes Schleppkabel, vorzugsweise in den Gesamtkörper integriert angeordnet ist. Durch die Integration wird verhindert, daß Einzelteile der Ölbarriere abgerissen werden. Vielmehr hängen alle Teile, d. h. alle Zellen an dem Schleppkabel, so daß auch bei hohen Windstärken eine Beeinträchtigung nicht erfolgen kann. Denkbar ist es natürlich auch, ein oder mehrere dieser Schleppkabel außen an den einzelnen Zellen anzubringen, wobei die Kabel auch ggf. in das die Zellen umgebende Gewebe eingebunden werden können. Die Ausbildung als Glasfaserkabel hat den Vorteil, daß dann das Kabel zusammen mit der gesamten Ölbarriere beispielsweise durch Aufschmelzen entsorgt werden kann.

Weiter oben ist bereits darauf hingewiesen worden, daß auch der Einsatz von langkettiger Stärke und Silikonharz vorteilhaft sein kann, wobei Silikonharz leicht zu verarbeiten ist. Dabei ist es von Vorteil, wenn das entsprechende aus langkettiger Stärke und Silikonharz bestehende Bindemittel in einer Menge von 6 - 8 % zugegeben wird (94 - 96 % Stärke und 4 - 6 % Silikon bzw. Silikonharz). Der relativ Hohe Anteil des Bindemittels Stärke + Silikon bietet die Sicherheit, daß auch alle Fasern ausreichend beschichtet sind, so daß sich weder Nester bilden, noch Bereiche, in denen eine ungenügende Bindung vorhanden ist. Gerade für den vorgesehenen Einsatzfall ist eine wirksame Bindung der einzelnen Fasern aneinander wichtig, einmal um das nötige Aufnahmevolumen zu gewährleisten und zum anderen um die hohen Zugkräfte besser aufnehmen zu können.

Die Erfindung zeichnet sich dadurch aus, daß ein Öladsorber geschaffen ist, der vielseitig und vor allem auch mehrfach zu verwenden ist. Die Ölbarriere läßt sich gut herstellen und verfügt sowohl durch ihre Zusammensetzung aus Glasfasern, durch die Ummantelung wie auch ihre Ausbildung als solche über eine hohe Zugfestigkeit, so daß entsprechend lange und auch durch die Aufnahme des Öls schwere Barrieren gut zu händeln sind. Die einzelnen Zellen der Ölbarriere sind einmal mit hydrophobiertem und einmal mit hydrophilem Fasermaterial bestückt, wobei für den hydrophilen Bereich der Barriere vor allem Epoxy-Harz mit Härter zum Einsatz kommt. Auch dieses Material trägt dazu bei, daß daraus hergestellte Barrieren eine hohe Zugfestigkeit haben und damit ausgesprochen gut und vielfach einsetzbar sind. Auch für die Entsorgung stellen diese Gesamtbarrieren keine Probleme dar, weil sie problemlos geschmolzen werden können. Damit kann die Barriere recycelt werden. Dies gilt auch dann, wenn in die Barriere ein Schleppkabel integriert ist, weil dieses ebenfalls aus Glasfasern besteht. Darüber hinaus verfügt ein solches Schleppkabel über enorm hohe Zugkräfte. Vor allem ist aber durch die zwei- oder mehrzellige Ausbildung der Ölbarriere das Überwinden durch Öl bei Seegang ausgeschlossen. Dies gilt sowohl für den Überwasser- wie auch für den Unterwasserteil, der eine entsprechende Formgebung aufweisen kann, um das Überwinden durch das Öl zusätzlich zu erschweren.

Weitere Einzelheiten und Vorteile des Erfindungsgegenstandes ergeben sich aus der nachfolgenden Beschreibung der zugehörigen Zeichnung, in der ein bevorzugtes Ausführunsbeispiel mit den dazu notwendigen Einzelheiten und Einzelteilen dargestellt ist. Es zeigen:
- Fig. 1: ein von einer Barriere umgebendes Schiff, aus dem Öl ausgelaufen ist oder das Öl aufnehmen soll,
- Fig. 2: einen Schnitt durch die Barriere mit Verschmälerung,
- Fig. 3: einen Schnitt durch die Barriere mit angeformten Ansatz und entsprechender Ummantelung,
- Fig. 4: eine Barriere mit Haube,
- Fig. 5: eine plattenartige Ausbildung der Barriere,
- Fig. 6: ein Endlosgliederband zur Formgebung einer entsprechenden Barriere und
- Fig. 7: einen Schnitt durch ein derartiges Endlosgliederband zur Verdeutlichung der entsprechenden Verformung der Barriere,
- Fig. 8: einen Schnitt durch eine Ölbarriere mit mehrteiligem Sinkteil,
- Fig. 9: einen Schnitt durch eine Ölbarriere wie Fig. 8 mit zusätzlichem Schleppkabel und
- Fig. 10: einen Schnitt durch eine Ölbarriere wie Fig. 9 mit einem Schleppschwert.

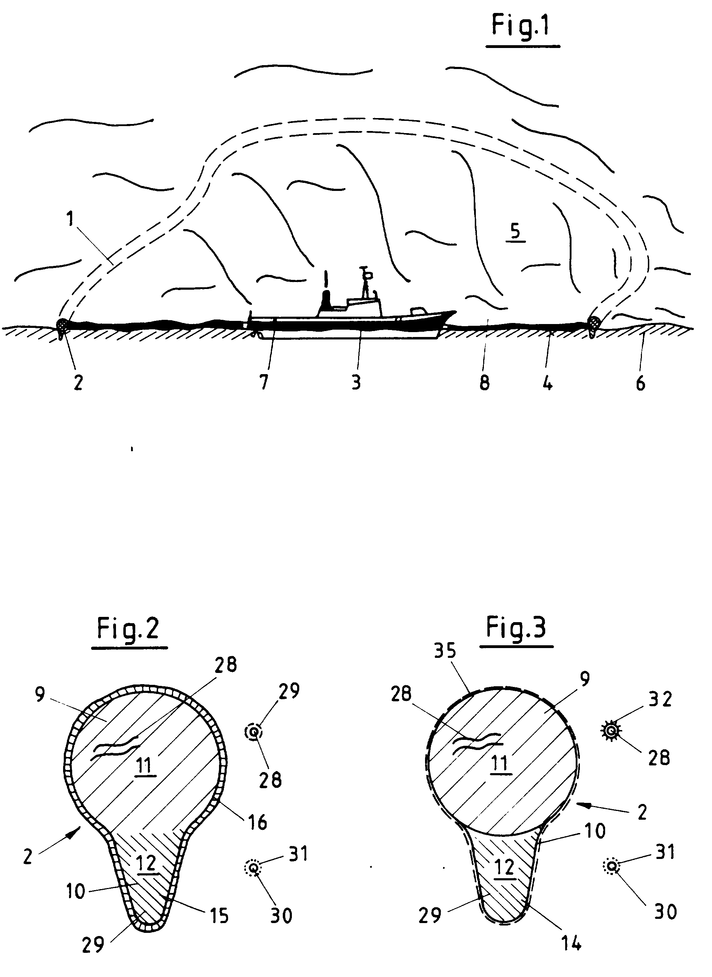

Fig. 1 zeigt einen ringförmigen Öladsorber 1, der in Form einer Barriere 2 um ein Schiff 3 herumgelegt ist, das in einer auf der Wasseroberfläche 4 schwimmenden Öllache bzw. Ölfläche 5 fährt bzw. hier festliegt, beispielsweise um das schwimmende Öl wieder aufzunehmen. Es kann sich aber auch um das havarierte Schiff handeln, nur müßte es dann als Öltanker ausgebildet sein. Da es sich hier um eine Art Schnitt und perspektivische Darstellung handelt ist erkennbar, daß sich auf dem Wasser 6 bzw. auf der Wasseroberfläche 4 eine entsprechend dicke Ölschicht 8 abgelagert hat.

Am Schiff 3 sind Halterungen 7 außenbordseitig vorgesehen, an denen während der Fahrt der Öladsorber 1 gelagert ist. Dadurch besteht beispielsweise bei Öltankern die Möglichkeit, bei evtl. kurzfristig auftretenden Problemen diesen Öladsorber auf die Wasseroberfläche 4 zu bringen, um von vornherein ein Ausbreiten eines entsprechenden Ölteppichs bzw. einer Ölfläche 5 zu verhindern.

Fig. 2 und 3 verdeutlichen, daß der Öladsorber 1 bzw. die Barriere 2 mehrzellig ist. Die größere Zelle 9 ist mit einer Fasermatte 11 ausgefüllt, die aus hydrophobierten Glasfasern 28 besteht. Diese Glasfasern 28 sind hier beispielsweise mit Epoxy-Harz, Härter, Silikonharz und Staubbindemittel beschichtet, so daß sie zwar kein Wasser, dafür aber beispielsweise Öl aufnehmen und anlagern kann, so daß diese Barriere 2 gleichzeitig eine Mehrfachfunktion erfüllt.

Die im Volumen kleinere Zelle 10 ist mit einer nichthydrophobierten Fasermatte 12 gefüllt, was durch den entsprechenden Strichabstand kenntlich gemacht ist. Diese kleinere Zelle 10 und ihre Formgebung ergeben eine Art Schwert unter dem eigentlichen Öladsorber 1, der das Unterlaufen durch Öl erschwert bzw. unmöglich macht und der gleichzeitig dafür sorgt, daß die Barriere jeweils in der wiedergegebenen Form auf dem Wasser 6 aufschwimmt, ohne sich zu verdrehen und damit evtl. unwirksam zu werden.

Nach Fig. 3 ist ein nasenförmiger Ansatz 14 vorgesehen. Die Figur verdeutlicht, daß es sich hier eigentlich um zwei Teile handelt, die durch Verklebung des äußeren Mantels der Zelle 10 an der Zelle 9 zu einer Baueinheit zusammengefaßt ist. Auf eine Halterung oder eine Verstärkung kann verzichtet werden, weil die durch das schon erwähnte Bindemittel 29 hydrophobierten Glasfasern 28 ein so starkes Gerüst bilden, daß hohe Zugkräfte aufgenommen werden können. Außerdem ist außen auf die Außenwandung 36 ein Glasvlies 35 aufgebracht, über das die Zugfestigkeit zusätzlich wesentlich erhöht wird.

Während nach Fig. 3 der nasenförmige Ansatz 14 vorgesehen ist, der ein aus zwei Teilen bestehendes Bauteil wiedergibt, ist nach Fig. 2 ein einteiliger Öladsorber 1 dargestellt. Hier wird durch den perforierten Schlauch 16 der sowohl die größere Zelle 9 wie auch die Verschmälerung 15 mitumgibt, die Form des Schlauches bzw. des Öladsorbers dem jeweiligen Einsatzfall entprechend vorgegeben.

Sowohl anhand der Fig. 2 wie anhand der Fig. 3 ist verdeutlicht, daß die einzelnen Glasfasern 28 oder auch 30 mit unterschiedlichen Bindemitteln 29 bzw. 32 hydrophobiert werden können. Im ersteren Fall ist Epoxy-Harz mit dem Silikonharz und den sonstigen Teilen vermischt, während im zweiten Fall zusätzlich Stärke verarbeitet wird. Die Glasfasern 30, die in der kleineren Zelle 10 untergebracht sind, werden hydrophil gehalten, indem man auf Silikon verzichtet. Das entsprechende Bindemittel ist mit 31 bezeichnet.

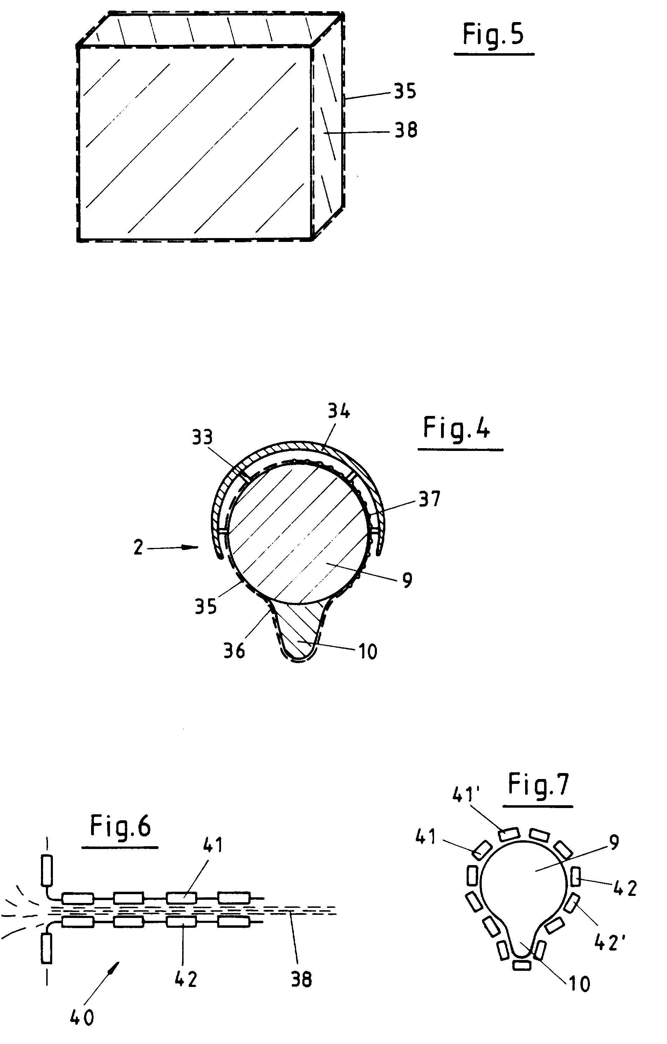

Nach Fig. 4 ist zusätzlich im oberen Teil eine Haube 34 vorgesehen, die über Abstandshalter 33 im Abstand zur eigentlichen Außenwandung 36 gehalten wird, so daß sich hier das automatisch freigesetzte Gas ansammeln kann. Dies führt zur Erhöhung der Schwimmfähigkeit. Fig. 4 verdeutlicht außerdem die besondere Ausbildung der Ummantelung 37, hier in Form von Glasfasern, so daß die Barriere 2 in ihrer Gesamtlänge über eine sehr hohe Zugfestigkeit verfügt und darüber hinaus auch günstig entsorgt werden kann, weil sie insgesamt aus dem gleichen Material, nämlich aus Glas besteht.

Fig. 5 zeigt eine Variante insofern, als hier die Barriere aus entsprechend vielen flachen Matten 38 gebildet werden soll. Die einzelnen Matten 38 sind entweder einzeln oder insgesamt von der Ummantelung 37 oder auch dem Glasvlies 35 umgeben. Diese flache Matte 38, insbesondere in Form von einzelnen Teilkörpern kann insbesondere auch dazu benutzt werden, die Bilsch von Schiffen zu entsorgen, indem zunächst einmal die Matte einfach auf die Wasseroberfläche aufgeworfen wird, um das Öl aufzunehmen und dann später nach Wegnahme der Matten 38 das Öl zu entsorgen.

Fig. 6 und 7 zeigen Vorschläge, wie die Matten 38 oder aber auch die runden Barrieren 2 am Strang hergestellt werden können. Das Endlosgliederband 40 besteht aus einer Vielzahl von Einzelgliedern 41, 42, die gem. Fig. 7 so angeordnet bzw. geformt sind, daß sich ein annähernd kreisrunder, länglicher Schlauch mit entsprechend nasenförmigem Ansatz ergibt. Die jeweils einander gegenüberliegend angeordneten Einzelglieder 41, 42, 41', 42' sind verschiebbar angeordnet, so daß entsprechend unterschiedliche Raumdichten hergestellt werden können.

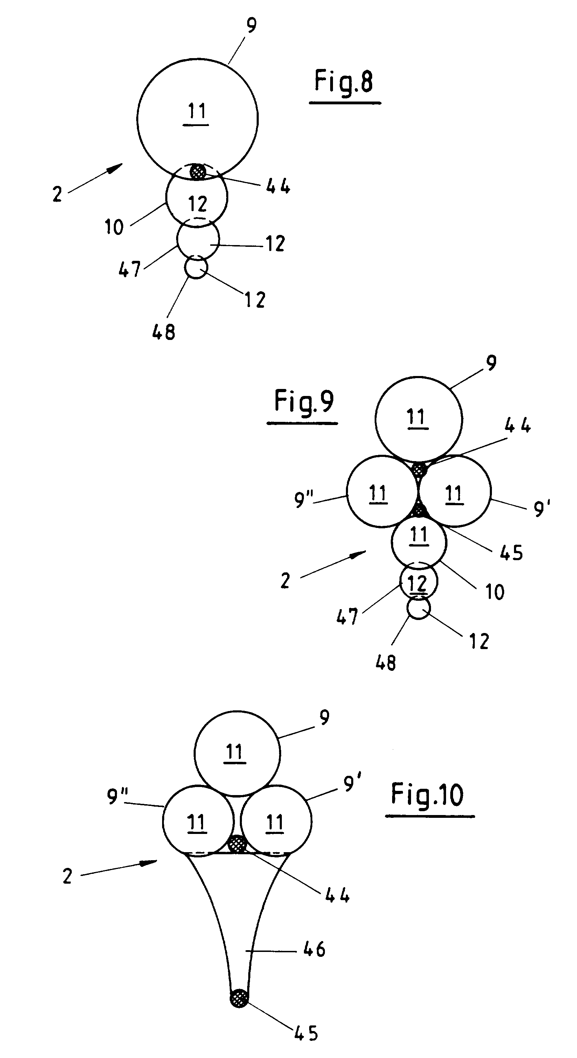

Fig. 8 zeigt eine Ölbarriere, die aus mehreren, hier insgesamt vier Zellen besteht, nämlich den Zellen 9, 10, 47, 48. Wie verdeutlicht, sind diese einzelnen Zellen 9, 10, 47, 48 ineinander verhakt oder ineinander gewebt, so daß das Gesamtgebilde sich vorteilhaft bewegen kann, ohne daß die Gefahr besteht, daß Öl oder ölähnliche Produkte zwischen den einzelnen Zellen hindurch austreten können. Da die im Wasser hängenden Zellen, d.h. zumindestens die Zellen 47 und 48 mit hydrophilem Material gefüllt sind, wirken sie vorteilhaft als Senkschwert und sorgen dafür, daß sich die aufschwimmende Zelle 11 insbesondere nicht vom Wasserspiegel abheben kann.

Das im Prinzip gleiche gilt auch für die Ausbildung nach Fig. 9, wobei hier ebenfalls wie bei Fig. 8 in die Barriere 2 Schleppkabel 44 integriert ist. Zusätzlich ist noch ein weiteres Schleppkabel 45 vorgesehen, um auf diese Art und Weise ein Herausziehen aus dem Wasser bzw. ein Abheben von der Wasseroberfläche zu erschweren. Hierzu wäre es denkbar, auch der Zelle 48 noch ein solches Schleppkabel zuzuordnen. Abweichend von den übrigen Ausbildungen besteht hier der schwimmfähige Teil aus zumindest drei Zellen 9, 9', 9", während die Zelle 10 ebenfalls mit hydrophilem oder aber auch hydrophobem Material gefüllt werden kann, je nachdem welche Gegebenheiten beim Einsatzfall erwartet werden.

Die Ausbildung nach Fig. 10 unterscheidet sich von der nach Fig. 9 lediglich dadurch, statt daß der einer gegeneinander beweglichen Zellen 47, 48 hier ein einziges Schleppschwert 46 vorgesehen ist. Bei dieser Ausbildung ist unten in dieses Schleppschwert noch einmal ein Schleppkabel 45 integriert, was die Senkschwertwirkung dieses Schleppschwertes 46 noch zusätzlich erhöht.

## Patentansprüche

1. Ölbarriere (2) die auf dem Wasser (6) zur Eindämmung von Öl oder ölähnlichen Stoffen aufschwimmt, bestehend aus einem auf dem Wasser (6) aufschwimmenden Bereich (9) aus hydrophobiertem Material und einem ins Wasser eingetauchten Bereich (10) aus unbehandeltem und bezüglich der Barriere (2) stabilisierend wirkenden Material,
**dadurch gekennzeichnet,**
daß das Material für beide als Zellen (9, 10) ausgebildeten Bereich aus Glasfasern (28, 30) besteht, die zu einem langen, dicken Faserstrang ergebenden Fasermatten (11, 12) geformt sind und beide Zellen (9, 10) bilden, wobei die ins Wasser (6) eintauchende, die hydrophilen und mit einem wasserunlöslichen Bindemittel versehenen Fasermatten (12) aufnehmende Zelle (10) wesentlich kleiner ist und etwa 1/10 bis 1/3 des Volumens der weitgehend auf dem Wasser aufschwimmenden Zelle (9) der Barriere (2) aufweist.

2. Ölbarriere nach Anspruch 1,
**dadurch gekennzeichnet,**
daß die Glasfasern (28, 30) der Fasermatten (11) mit einem aus Epoxy- und/oder Methylon- oder Polyesterharz, Härter, Methylpolysiloxan oder Silikonmethylharz und Staubbindemittel bestehenden Bindemittel (29) (hydrophob) bzw. die Fasermatten (12) mit einem aus Epoxy- und/oder Methylon- oder Polyesterharz, Härter und Staubbindemittel bestehenden Bindemittel (31) (hydrophil) beschichtet sind, das vorher zu einer Emulsion gemischt oder als Einzel- oder Mehrkomponentenstoff auf die Fasern aufgesprüht ist.

3. Ölbarriere nach Anspruch 2,
**dadurch gekennzeichnet,**
daß die Glasfasern (28, 30) mit 6 - 9 Gew.-% Epoxy- und/oder Methylonharz, 0,5 - 4 Gew.-% Silikonharz und wie bekannt Staubbindemittel geringer Menge beschichtet sind.

4. Ölbarriere nach Anspruch 1 bis Anspruch 3,
**dadurch gekennzeichnet,**
daß die ins Wasser (6) eintauchende Zelle (10) der Barriere (2) von einer nasenförmigen Verschmälerung (15) gebildet ist, wobei beide Zellen (9, 10) von einem dünnen Glasflies (35) o. ä. Ummantelung (37) umfaßt sind.

5. Ölbarriere nach Anspruch 1,
**dadurch gekennzeichnet,**
daß die Fasermatte (11) für die großvolumige Zelle (9) aus rund 3 µ starken Glasfasern gefertigt sind, wobei als Bindemittel eine langkettige Stärke mit Silikonbeimengungen dient und eine Raumdichte von rund 80 kg/m³ aufweisen.

6. Ölbarriere nach Anspruch 1,
**dadurch gekennzeichnet,**
daß die Barriere (2) über Halterungen (17) verfügt, die die Verlegearbeiten und Rücknahme erleichternd und die mit außenbordseitig der Schiffe (3) angebrachten Halterungen (7) korrespondierend geformt sind.

7. Ölbarriere nach Anspruch 1,
**dadurch gekennzeichnet,**
daß mehr als zwei, vorzugsweise vier Zellen (9, 10, 47, 48) mit sich nach unten hin verringerndem Durchmesser eine Barriere (2) bildend und beweglich zu einander verbunden sind, wobei die Zellen (9, 9', 9") die Speicherzelle und eine keilförmige Zelle (10) als Schleppschwert (46) die Führungszelle bildend zusammengefügt sind.

8. Ölbarriere nach Anspruch 1,
**dadurch gekennzeichnet,**
daß zwischen den einzelnen Zellen (9, 10, 47, 48) ein als Glasfaserkabel ausgebildetes Schleppkabel (44, 45) angeordnet ist.

9. Ölbarriere nach Anspruch 8,
**dadurch gekennzeichnet,**
daß das Schleppkabel (44, 45) in den Gesamtkörper integriert ist.

10. Ölbarriere nach Anspruch 5,
**dadurch gekennzeichnet,**
daß das aus langkettiger Stärke und Silikon bestehende Bindemittel in einer Menge von 6 - 8 % zugegeben wird (94 - 96 % Stärke und 4 - 6 % Silikon).

## Claims

1. Oil barrier (2) which floats on the water (6) for checking oil or substances similar to oil, comprising a section (9) floating on the water (6) made of hydrophobed material and a section (10) dipping into the water made of untreated material which has a stabilising effect on the barrier (2),
**characterised in that**
the material for both sections in the form of cells (9, 10) is made of glass fibres (28, 30) which are shaped into a long, thick fibrous rope forming fibre mats (11, 12) and form the two cells (9, 10), whereby the cell (10) dipping into the water (6) holding the hydrophilic fibre mats (12) provided with a water insoluble binding agent is much smaller and has about 1/10 to 1/3 the volume of the cell (9) of the barrier (2) mainly floating on the water.

2. Oil barrier according to claim 1,
**characterised in that**
the glass fibres (28, 30) of the fibre mats (11) are coated with a binding agent (29) (hydrophobic) made of epoxy and/or methylone or polyester resin, hardener, methylpolysiloxane or silicone methyl resin and dust binding agents, or the fibre mats (12) are coated with a binding agent (31) (hydrophilic) made of epoxy and/or methylone or polyester resin, hardener and dust binding agents, which binding agent is previously mixed into an emulsion or sprayed onto the fibres as an individual or multicomponent substance.

3. Oil barrier according to claim 2,
**characterised in that**
the glass fibres (28, 30) are coated by 6 - 9 wt. % epoxy and/or methylone resin, 0.5 - 4 wt. % silicone resin and as already known dust binding agents in a small amount.

4. Oil barrier according to claim 1 to claim 3,
**characterised in that**
the cell (10) of the barrier (2) dipping into the water (6) is in the form of a nose-shaped narrowed part (15), whereby both cells (9, 10) are covered by a thin glass fleece (35) or similar casing (37).

5. Oil barrier according to claim 1,
**characterised in that**
the fibre mats (11) for the large volume cell (9) are made of approximately 3 µ strength fibre-glass, whereby a long-chain starch with silicone admixtures serves as a binding agent and has a density of about 80 kg/m³.

6. Oil barrier according to claim 1,
**characterised in that**
the barrier (2) has holders (17) which are shaped to facilitate laying out and taking in and to correspond with holders (7) attached to the outboard side of the ship (3).

7. Oil barrier according to claim 1,
**characterised in that**
more than two, preferably four cells (9, 10, 47, 48) are joined together to have a diameter that decreases towards the bottom forming a barrier (2) and to be movable in relation to one another, whereby cells (9, 9', 9"), the storage cell and a wedge-shaped cell (10) are joined together as a trailing fin (46) forming the guide cell.

8. Oil barrier according to claim 1,
**characterised in that**
between the individual cells (9, 10, 47, 48) a trailing cable (44, 45) is arranged in the form of a fibre-glass cable.

9. Oil barrier according to claim 8,
**characterised in that**
the trailing cable (44, 45) is integrated into the overall body.

10. Oil barrier according to claim 5,
**characterised in that**
the binding agent made of long-chain starch and silicone is added in an amount of 6 - 8 % (94 - 96 % starch and 4 - 6 % silicone).

## Revendications

1. Barrage flottant (2) qui flotte sur l'eau (6) pour retenir du pétrole ou des substances similaires au pétrole, composé d'une zone (9) flottant sur l'eau (6) réalisée en un matériau hydrophobe et d'une zone (10) enfoncée dans l'eau réalisée en un matériau non traité et agissant de manière stabilisatrice par rapport au barrage (2), caractérisé en ce que le matériau pour les deux zones conformées en cellules (9, 10) est constitué de fibres de verre (28, 30), qui sont formées en mats de fibres (11,12) donnant un long et épais cordon de fibres et forment les deux cellules (9, 10), la cellule (10) s'enfonçant dans l'eau (6) et recevant les mats (12) de fibres hydrophiles munis d'un liant insoluble dans l'eau est sensiblement plus petite et présente environ 1/10 à 1/3 du volume de la cellule (9) de la barrière (2) qui flotte en grande partie sur l'eau.

2. Barrage flottant selon la revendication 1, caractérisé en ce que les fibres de verre (28, 30) des mats de fibres (11) sont enduites d'un liant (29) (hydrophobe) constitué d'une résine époxy et/ou méthylone ou polyester, d'un durcisseur, de méthylpolysiloxane ou d'une résine de méthyle de silicone et d'un liant pulvérulent, et respectivement les mats de fibres (12) sont enduits d'un liant (31) (hydrophile) constitué d'une résine époxy et/ou méthylone ou polyester, d'un durcisseur et d'un liant pulvérulent, liant qui est d'abord mélangé pour former une émulsion ou est pulvérisé sur les fibres sous la forme d'une substance monocomposant ou multicomposant.

3. Barrage flottant selon la revendication 3, caractérisé en ce que les fibres de verre (28, 30) sont enduites de 6-9 % en poids de résine époxy et/ou méthylone, 0,5-4 % en poids de résine de silicone et, classiquement, de liant pulvérulent en faible quantité.

4. Barrage flottant selon la revendication 1 à 3, caractérisé en ce que la cellule (10) du barrage (2), qui s'enfonce dans l'eau (6), est formée d'un rétrécissement en forme de nez (15), les deux cellules (9, 10) étant entourées d'une mince natte de verre (35) ou d'une enveloppe similaire (37).

5. Barrage flottant selon la revendication 1, caractérisé en ce que les mats de fibres (11) pour la cellule de grand volume (9) sont fabriqués en fibres de verre d'environ 3 µM d'épaisseur, un amidon à chaîne longue avec ajouts de silicone servant de liant, et présentent une densité d'environ 80 kg/m³.

6. Barrage flottant selon la revendication 1, caractérisé en ce que le barrage (2) dispose de fixations (17), qui facilitent le travail de pose et de dépose et sont formées de manière correspondante à des supports (7) rapportés à l'extérieur des navires (3).

7. Barrage flottant selon la revendication 1, caractérisé en ce que plus de deux, de préférence quatre, cellules (9, 10, 47, 48) de diamètre se réduisant en direction du bas sont reliées entre elles de manière mobile les unes aux autres et en formant un barrage (2), les cellules (9, 9', 9"), la cellule de stockage et une cellule en forme de coin (10) servant de dérive traînante sont assemblées en formant la cellule de guidage.

8. Barrage flottant selon la revendication 1, caractérisé en ce qu'entre les différentes cellules (9, 10, 47, 48) est placé un câble de remorque (44, 45) conformé en câble en fibres de verre.

9. Barrage flottant selon la revendication 8, caractérisé en ce que le câble de remorque (44, 45) est intégré dans l'ensemble du corps.

10. Barrage flottant selon la revendication 5, caractérisé en ce que le liant constitué d'amidon à chaîne longue et de silicone est ajouté en une quantité de 6 - 8 % (94 - 96 % d'amidon et 4 - 6 % de silicone).
